# FASCICULE DE BREVET EUROPEEN

(11) **EP 2 005 198 B1**
(45) Date de publication et mention de la délivrance du brevet: **07.07.2010**
(21) Numéro de dépôt: 07731286.6
(22) Date de dépôt: 12.04.2007
(51) Int. Cl.: G01P 15/08

(54) **DISPOSITIF MICRO-ELECTRONIQUE INERTIEL A INTEGRATEUR LIQUIDE**
MIKROELEKTRONISCHE TRÄGHEITSVORRICHTUNG MIT FLÜSSIGKEITSINTEGRATOR
INERTIAL MICRO-ELECTRONIC DEVICE WITH LIQUID INTEGRATOR

(30) Priorité: 12.04.2006 FR 0603242
(43) Date de publication de la demande: 24.12.2008
(73) Titulaire: Commissariat à l'Énergie Atomique et aux Énergies Alternatives, 75015 Paris (FR)
(72) Inventeur: TASSETTI, Charles-Marie, F-75020 Paris (FR); TISSOT, André, F-78730 Saint Arnoult en Yvelines (FR); HAUSSY, Jacques, F-91190 Gif sur Yvette (FR)
(74) Mandataire: Quantin, Bruno Marie Henri
(86) Numéro de dépôt international: PCT/FR2007/000618
(87) Numéro de publication internationale: WO 2007/116156

(56) Documents cités:
- GB-A- 2 283 098
- US-A- 3 046 793
- US-A1- 2002 002 864
- US-B1- 6 453 746

## Description

L'invention concerne un système en technologie micro-électronique comportant une masse en mouvement (il s'agit donc d'un système inertiel), tel qu'un capteur d'accélération. Elle vise plus particulièrement un tel dispositif comportant un intégrateur.

Par technologie micro-électronique, on désigne la technologie consistant à fabriquer des composants par dépôts de couches et attaque sélective, notamment au travers de masques, en pratique sur des substrats semi-conducteurs, le plus souvent des substrats en silicium. De tels dispositifs micro-électroniques sont donc formés au sein d'un empilement de couches.

Dans le domaine de la technologie micro-électronique, il est courant de désigner des systèmes électro-mécaniques par le sigle anglais MEMS (pour Micro Electro Mechanical System) ; on désigne ainsi, notamment, des capteurs ou des actionneurs de petites tailles, parfois appelés capteurs ou actionneurs miniatures. Des exemples en sont donnés dans les documents US - 4 653 326, US - 5 576 250 ou 6 032 532 de la Demanderesse.

Des accéléromètres sont mis en oeuvre dans de nombreux domaines, lorsque l'on cherche à tenir compte de l'accélération de mobiles en mouvement ; on peut citer les domaines de l'aviation, du spatial, du transport au sens large (notamment pour vérifier d'absence d'accélérations excessives), de la défense, etc. Il peut s'agir de la détection d'événements, de l'historique de l'accélération, du vieillissement de structures soumises à des chocs ou à des accélérations, de la détection de conditions extrêmes susceptibles de nuire au fonctionnement d'un dispositif, de systèmes de sécurité (type airbag, par exemple), du déclenchement d'un dispositif suite à la détection d'un enchaînement d'évènements, de la détection des accélérations appliquées à un projectile, de vérifier le bon déroulement de la mission d'un objet mobile qui doit respecter une trajectoire donnée, etc. La miniaturisation de ces capteurs en technologie micro-électronique permet de les intégrer facilement dans l'objet ou dans son dispositif de commande ou de contrôle.

Des systèmes de ce genre ont notamment été conçus pour détecter les accélérations relatives au tir d'un obus ou d'une roquette, lors de l'éjection et de la mise en rotation de munition, voire au moment de l'impact sur la cible. Leur principe de fonctionnement repose sur la translation d'une masse sous l'action de l'accélération. La trajectoire de cette masse est en pratique ralentie par un système mécanique d'échappement similaire à un dispositif d'horlogerie ou bien par la forme des parois de contact. Les documents US - 5 705 767, US - 6 568 329, US - 6 321 654, US 6 167 809 et US - 2005/0183609 donnent des exemples de ce type de mécanismes. Ces capteurs répondent aux besoins de détection d'accélérations très élevées (de l'ordre de 10 000 g) pendant des durées très brèves (inférieures à 1 ms). Mais ces dispositifs ne permettent pas la détection d'accélérations plus faibles et/ou de durées plus importantes.

La détection d'accélérations faibles sur des durées longues a conduit au développement de capteurs parfois appelés capteurs intégrateurs, rentrant dans la catégorie de ce que l'on appelle des capteurs MEMS (voir en particulier le document US - 6 453 746) utilisant un système d'engrenages et d'échappement mécanique pour ralentir le déplacement d'une masse sismique (c'est-à-dire une masse dont l'objet est d'être sensible à une accélération suivant au moins une direction). Toutefois, la technologie de fabrication de ces dispositifs, connue sous le sigle LIGA (c'est-à-dire, en allemand Lithographie-Galvanoformung-Abformung, ce qui implique des notions de lithographie, d'électrodéposition et de moulage), est encore expérimentale et nécessite un équipement lourd et coûteux : source de rayons X, masques de lithographie spécifiques. En outre, la fiabilité à long terme de ces détecteurs est réduite en raison de l'usure mécanique qui peut se produire entre les pièces en contact.

La détection d'accélérations faibles sur des durées longues peut aussi être réalisée avec des systèmes électroniques intégrant en temps réel les données fournies par un accéléromètre classique. Mais ces dispositifs, intégrant un calculateur d'intégration, posent des problèmes de sécurité : sensibilité aux interférences électromagnétiques et aux rayonnement ionisants, risque d'interférences avec des dispositifs électriques situés à proximité en raison de la présence d'une alimentation électrique.

L'invention a pour objet de pallier aux inconvénients précités, en proposant un dispositif micro-électronique (ou miniature) inertiel capable de détecter des accélérations faibles sur une longue durée, qui soit simple de conception et de fabrication (et peu coûteux), qui ne conduise pas à des risques d'usure et qui soit fiable grâce à une faible sensibilité à l'environnement électromagnétique.

L'invention propose à cet effet un dispositif micro-électronique inertiel comportant, dans un empilement de couches, une enceinte, et une masse reliée à la paroi de cette enceinte par des éléments déformables en sorte d'être mobile dans cette enceinte parallèlement aux couches suivant une unique direction dite direction sensible, cette masse mobile étant montée dans un alésage de l'enceinte en sorte de former un étranglement séparant cette enceinte en deux cavités, cette enceinte étant remplie par un fluide sensiblement incompressible formant une phase unique.

Ainsi, l'invention propose d'associer une conception mécanique simple en technologie micro-électronique MEMS (le dispositif est formé au sein d'un empilement de couches) comportant un faible nombre de masses en mouvement guidées sans frottement de contact par de simples éléments déformables, à une intégration hydraulique. Puisque le nombre de masses en mouvement est faible et que leur guidage en mouvement est effectué sans frottement par des éléments déformables, la conception et la fabrication sont simples et peu coûteuses et il y a peu d'usure. Par ailleurs le fait de mettre en oeuvre une intégration hydraulique n'implique en soi aucune pièce mécanique en mouvement à positionner dans le dispositif et susceptible de provoquer une usure et profite simplement de l'effet intégrateur que produit le fait que les masses en mouvement se meuvent dans un liquide (ce fluide incompressible doit donc se déplacer en sens inverse des masses en mouvement). Il est ainsi possible d'amortir et d'intégrer les mouvements de pièces mobiles placées à l'intérieur du MEMS, en translation, en rotation ou selon des mouvements quelconques, et de réaliser ainsi des dispositifs possédant des comportements spatio-temporels particuliers. Le liquide d'amortissement qui assure l'intégration est en une phase unique en sorte d'éviter les phénomènes de collage pouvant nuire au fonctionnement.

Il faut noter que, dans le domaine des micro dispositifs inertiels à freinage, le principe de la mise en oeuvre d'une intégration hydraulique a été évoqué dans le document US - 6 453 746 pour être rejeté en raison des énormes effets de tension de surface à l'échelle micronique ; bien que de tels dispositifs intégrateurs aient pu être utilisés avec succès à une échelle plus grande, ce document conclut donc que seule une intégration mécanique est réaliste à l'échelle des dispositifs micro-électroniques.

Pourtant l'invention a constaté que, sous réserve de remplir l'enceinte avec une phase liquide unique, les phénomènes considérés a priori comme rédhibitoires dans ce document US - 6 453 746 ne se produisent pas.

L'invention s'applique avantageusement à la réalisation de capteurs d'accélération miniatures à amortissement fluide en technologie MEMS. Il peut être noté que ces capteurs fonctionnent sans source d'énergie et peuvent donc être aussi bien utilisés de façon autonome qu'être associés à un circuit électronique. L'utilisation de fluides pour réaliser la fonction d'amortissement les rend peu sensibles à l'usure mécanique. Ces capteurs permettent de mesurer des accélérations dans différentes gammes (il suffit de choisir en conséquence les dimensions du dispositif) et, en particulier, la détection d'accélérations de faibles amplitudes et de durées importantes. Ces dispositifs ne présentent pas une sensibilité significative à l'environnement électromagnétique.

Selon des caractéristiques avantageuses de l'invention, éventuellement combinées :
- le fluide sensiblement incompressible est de l'eau, ce qui revient à utiliser un liquide bien connu et dont la manipulation est bien maîtrisée,
- certaines des parois de l'enceinte sont traitées en sorte d'être hydrophobies, et/ou certaines des parois de l'enceinte sont traitées en sorte d'être hydrofuges, ce qui a l'avantage de faciliter le remplissage de l'enceinte, et/ou modifier l'interaction fluide / pièce mobile,
- l'intérieur de l'enceinte ne comporte que des angles internes arrondis, ce qui contribue à obtenir un bon mouillage de la paroi par le fluide sensiblement incompressible, c'est-à-dire par le liquide choisi,
- les deux cavités sont de largeurs différentes transversalement à la direction sensible, les éléments déformables étant dans la cavité de plus grande largeur et l'alésage étant défini par la paroi de la cavité de plus petite largeur, ce qui évite d'avoir à former une paroi transversale pour former l'étranglement ; l'enceinte a ainsi, au moins localement une forme en T,
- la masse mobile comporte une portion élargie formant un piston délimitant l'étranglement conjointement avec l'alésage ; on obtient ainsi une sorte de guidage du piston au niveau de l'étranglement,
- l'empilement de couches comporte une couche formant un fond, une couche dans laquelle sont formés la masse mobile et les éléments déformables, d'un seul tenant, et une couche formant un couvercle, ce qui correspond à une structure bien connue,
- l'une des couches formant le fond ou le couvercle est transparente, de préférence en verre : il s'agit là de matériaux bien connus pour être micro-usinables et qui permettent un accès visuel à l'intérieur de l'enceinte et un contrôle de l'état du liquide de remplissage,
- la couche dans laquelle sont formés la masse mobile et les éléments déformables est une couche de silicium ; de manière avantageuse, la couche formant le fond est en silicium et est séparée de la couche dans laquelle sont formés la masse mobile et les éléments déformables par une couche d'oxyde ; il s'agit là d'une structure bien connue,
- la distance entre le fond de l'enceinte et la masse mobile est l'épaisseur d'oxyde ; cet espacement établit un étranglement supplémentaire pour freiner l'écoulement du fluide,
- la distance entre le couvercle de l'enceinte et la masse mobile est la profondeur d'un creux ménagé dans la couche formant ce couvercle ; de manière avantageuse, le fond du creux ménagé dans la couche formant le couvercle est recouverte d'une couche de nitrure de silicium ; cela contribue à former un étranglement supplémentaire tout en évitant les risques de collage de la masse mobile,
- l'enceinte comporte au moins deux orifices de remplissage (O) obturés de manière étanche, dont un orifice débouchant dans chaque cavité ; cette dualité (orifice d'entrée / orifice de sortie) a permis, lors du remplissage avant obturation, un bonne circulation du fluide dans la totalité de l'enceinte, et donc un bon remplissage lorsqu'on a décidé d'arrêter de laisser sortir du liquide,
- il comporte un dispositif de lecture, permettant de lire les informations découlant du mouvement de la masse mobile,
- ce dispositif de lecture est optique, le dispositif comportant une portion transparente prévue pour permettre cette lecture optique,
- il comporte en outre un dispositif de verrouillage ; dans ce cas, le dispositif de verrouillage et le dispositif de lecture sont avantageusement dans des cavités différentes, ce qui contribue à laisser la masse bien alignée avec la direction sensible.

L'invention propose en outre un procédé de fabrication d'un dispositif micro-électronique inertiel du type précité, selon lequel on forme un empilement de couches , on y définit une enceinte, une masse reliée à la paroi de cette enceinte par des éléments déformables en sorte d'être mobile dans cette enceinte parallèlement aux couches suivant une unique direction sensible, cette masse étant montée mobile dans un alésage de l'enceinte en sorte de former un étranglement séparant cette enceinte en deux cavités, et on remplit cette enceinte par un fluide sensiblement incompressible formant une phase unique.

Selon des caractéristiques avantageuses de ce procédé, éventuellement combinées :
- l'on forme l'empilement de couches en sorte de laisser temporairement dégagé au moins un orifice de remplissage, et on fait dégazer le liquide de remplissage , on met l'enceinte sous vide et on la remplit avec ce liquide de remplissage,
- en outre, on fait dégazer un liquide de remplissage temporaire, on remplit l'enceinte avec ce liquide de remplissage temporaire et on remplace ce dernier par le liquide de remplissage,
- le liquide de remplissage temporaire est un liquide présentant une tension de surface inférieure à celle du liquide de remplissage ; en fait, on peut faire intervenir autant de liquides de remplissage temporaire que l'on souhaite, en choisissant de préférence des tensions de surface croissantes d'un liquide à l'autre,
- le liquide de remplissage temporaire est un alcool, par exemple l'alcool isopropyl,
- le liquide de remplissage est de l'eau,
- l'on remplit l'enceinte par un orifice de remplissage et on aspire au moins une partie de ce liquide par un orifice d'aspiration,
- l'on vérifie le bon remplissage de l'enceinte par contrôle visuel au travers d'une portion transparente du dispositif.

Des objets, caractéristiques et avantages de l'invention ressortent de la description qui suit, donnée à titre d'exemple illustratif non limitatif, en regard des dessins annexés sur lesquels :
- la figure 1 est un schéma de principe d'un dispositif micro-électronique inertiel à intégrateur liquide conforme à l'invention,
- la figure 2 est un schéma d'un tel dispositif comportant un dispositif de lecture optique,
- la figure 3 est un schéma d'un autre dispositif comportant en outre un dispositif de verrouillage,
- la figure 4 est une vue en coupe d'un sous-ensemble du dispositif selon le principe de la figure 2, dans un plan traversant l'étranglement entre la paroi de l'enceinte et la masse inertielle,
- la figure 5 est une autre vue en coupe de cet état intermédiaire, dans un plan traversant des bras de guidage élastiquement déformables,
- la figure 6 est une vue en coupe d'un autre sous-ensemble du dispositif,
- la figure 7 est une vue en coupe du dispositif obtenu par assemblage des sous-ensembles des figures 5 et 6, dans le même plan de coupe que la figure 4, et
- la figure 8 est un schéma d'un système de remplissage du dispositif de la figure 7.

De manière générale, l'invention propose de réaliser, en technologie MEMS, un système mécanique à amortissement fluide, cet amortissement permettant une intégration au cours du temps. Pour cela, un dispositif mécanique MEMS comportant au moins une masse inertielle en mouvement (elle est unique mais il peut y en avoir, en faible nombre), réalisé par toute technologie connue appropriée, est totalement rempli d'un fluide sensiblement incompressible amortissant le déplacement de la masse en mouvement. L'amortissement se fait par le frottement visqueux du fluide mis en mouvement par la masse en mouvement et par les turbulences éventuellement générées. Ce phénomène de freinage est tout particulièrement sensible grâce à l'aménagement d'un étranglement situé entre la masse en mouvement et la paroi de l'enceinte et qui sépare deux cavités au sein de l'enceinte du dispositif ; en effet le mouvement de la masse dans une direction dite direction sensible provoque un mouvement du liquide en sens inverse au travers de cet étranglement. En outre, le fluide sensiblement incompressible, c'est-à-dire le liquide, peut être contraint de passer dans des passages calibrés de faibles dimensions prévus en complément de cet étranglement pour augmenter le freinage.

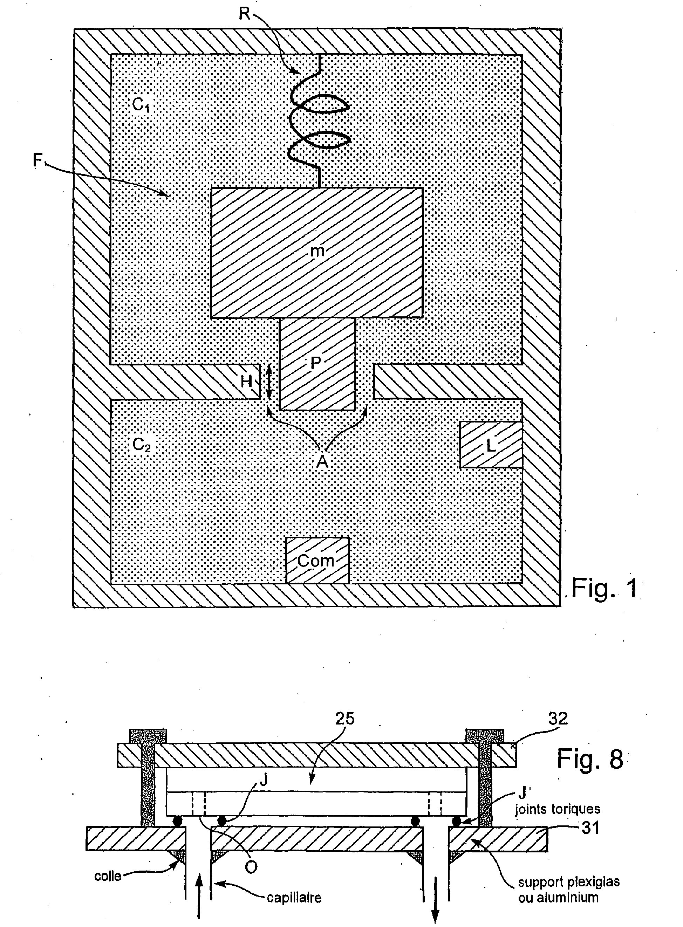

La figure 1 est un schéma de principe d'un exemple de dispositif inertiel conforme à l'invention.

Ce dispositif est réalisé en technologie micro-électronique MEMS à partir d'un substrat (il peut y avoir plusieurs substrats), en mettant en oeuvre des matériaux capables d'être micro-usinés, notamment par gravure chimique (notamment, semi-conducteurs, polymères, verres, céramiques).

Ce dispositif est ici un dispositif mécanique inertiel du type oscillant selon une direction de translation (constituant une direction sensible), ici verticale, et à amortissement supercritique.

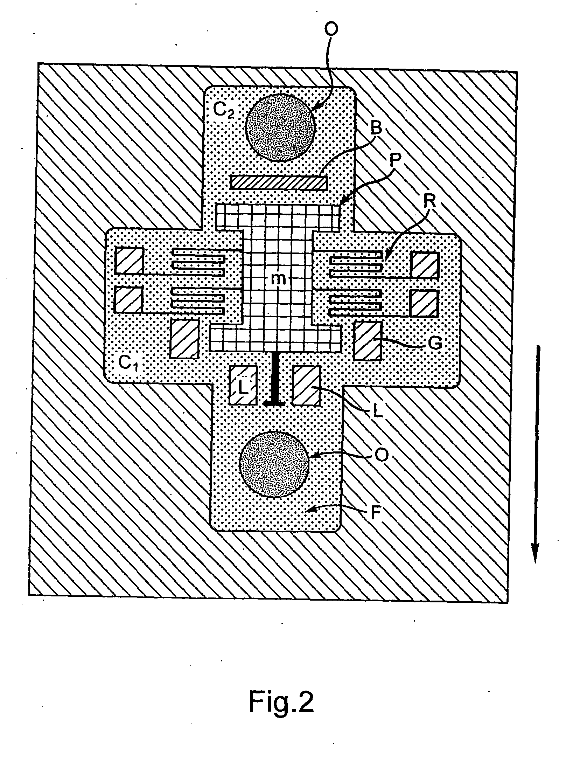

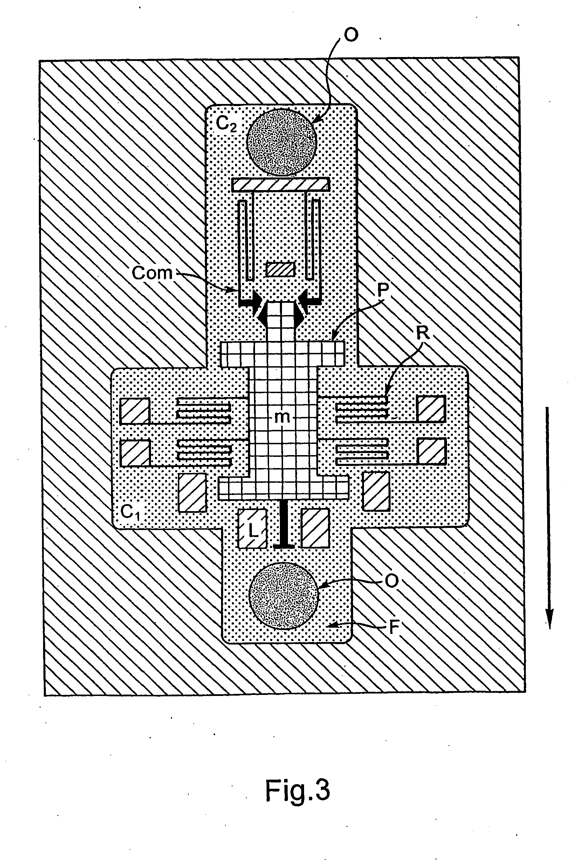

Plus précisément, tel que schématisé, ce dispositif comporte une masse d'inertie **m** comportant une portion formant un piston **P** et enfermée dans une enceinte étanche remplie d'un fluide sensiblement incompressible **F** en une seule phase. Cette enceinte étanche comporte deux cavités **C1** et **C2**, reliées par un alésage **A** traversé par la portion formant un piston, parallèlement à l'axe sensible. La masse d'inertie **m** est reliée à l'enceinte par un (ou plusieurs) ressorts R agissant selon cet axe sensible tout en étant guidée en translation, selon l'axe sensible, par des éléments non représentés ; ces ressorts et les éléments de guidage peuvent être conjointement constitués par des éléments déformables de tout type connu approprié (des exemples en sont donnés par les figures 2 et 3. Le dispositif est conçu en sorte que, sous l'effet d'une accélération horizontale ou perpendiculaire au plan de la figure 1, la masse d'inertie reste sensiblement fixe ; cela peut être obtenu en formant les éléments déformables de manière à ce qu'ils ne soient déformables que suivant la direction verticale, ce qui explique que cette direction soit dite sensible. Sous l'effet d'une accélération suivant cette direction sensible, la masse (et en particulier le piston) se déplace dans l'enceinte tout en étant freinée par le fluide sensiblement incompressible, en raison des frottements visqueux qui s'exercent sur la masse avec son piston ; en effet, le déplacement du piston de l'une des cavités vers l'autre implique que du fluide circule en sens inverse. En fait ce freinage est principalement sensible au niveau de l'alésage, compte tenu de l'étroitesse de l'étranglement existant entre le piston et cet alésage, qui restreint la circulation du fluide entre les deux cavités, compte tenu de la viscosité du fluide. On comprend que les pertes de charge ainsi générées provoquent un amortissement du mouvement de la masse avec son piston ; on comprend en outre que le déplacement de la masse dans l'enceinte sera d'autant plus important que l'accélération appliquée à la masse suivant la direction sensible est durable. Ces pertes de charge dépendent de la section de la fuite de fluide sensiblement incompressible au niveau de l'étranglement (différence entre les sections de l'alésage et du piston), de la dimension H de cet étranglement suivant la direction sensible (cet étranglement peut dans certaines conditions être assimilé à un canal capillaire), et de la viscosité η du fluide. Quant aux frottements visqueux, ils dépendent de la géométrie de la masse inertielle et de son piston et de la viscosité du fluide. La force de traînée due au déplacement des parties mécaniques dans la cavité est apparue pouvoir être négligée.

Ce dispositif est sensible à des accélérations en translation suivant la direction sensible, mais on comprend aisément qu'un dispositif analogue peut être obtenu, pour détecter des accélérations en rotation dès lors que la portion formant piston est en un arc de cercle centré sur l'axe de la rotation à détecter ; de sorte que le piston se déplace suivant une direction sensible qui n'est plus rectiligne mais arquée. Ainsi l'invention s'applique aussi bien à une détection d'accélération linéaire qu'à une détection d'accélération en rotation, et peut s'appliquer à toute combinaison d'accélérations (il peut y avoir plusieurs dispositifs disposés suivant les diverses directions suivant lesquelles on souhaite détecter des accélérations).

Ce dispositif comporte en pratique un dispositif de lecture d'information, schématisé sous la référence **L** sur la figure 1 ; il peut être de tout type connu approprié (notamment optique, électrique ou mécanique, voir ci-dessous), et agir en tout ou rien ou de manière progressive.

C'est ainsi qu'il peut comporter un dispositif commutable **Com** qui change d'état lorsque le déplacement de la masse inertielle atteint une valeur prédéterminée, indépendamment des mouvements ultérieurs de la masse. Il garde la mémoire de cet évènement et peut être, ensuite, relu à tout moment. En variante, le passage de l'ensemble masse-piston peut aussi incrémenter un compteur pour déterminer le nombre de sollicitations supérieures à une valeur prédéterminée du couple accélération-durée.

Pour d'autres applications, le système de lecture mis en place est capable de lire la position de l'ensemble masse-piston en temps réel ou de façon ponctuelle.

Des exemples de divers types de lecture sont donnés ci-dessous (on en trouve aussi des exemples dans le document US - 6 453 746 précité, notamment) :
- lecture optique : déflexion d'un faisceau laser, translation d'une fenêtre optique, translation d'une partie mécanique devant une règle graduée (type vernier),
- lecture électrique : contact entre deux parties conductrices lorsque la détection est positive, lecture électrique de la déflexion des ressorts par effet piézo-résistif, mesure capacitive,
- lecture mécanique : un dispositif est enclenché si le bon profil a été détecté (libération de masse, d'énergie potentielle élastique, etc.),
- lecture chimique : mise en contact de composés chimiques réagissant entre eux lorsque le bon profil a été détecté.

On comprend aisément que les paramètres déterminant les performances du dispositif, tel que l'accéléromètre-intégrateur ici considéré, sont principalement la masse de la masse inertielle, la rigidité des ressorts suivant la direction sensible, la section du piston et celle de l'étranglement (donc des fuites), la dimension de l'étranglement suivant la direction sensible (de même que la section et la dimension suivant cette même direction d'éventuels canaux supplémentaires, avantageusement capillaire) et la viscosité du fluide sensiblement incompressible. L'homme de métier sait, dans l'exemple ici considéré, comment choisir ces paramètres afin d'être en régime d'amortissement supercritique selon la théorie classique des oscillateurs mécaniques. D'autre part, ces paramètres sont à choisir en sorte d'adapter le dispositif à la gamme d'accélérations, au temps d'intégration et au déplacement souhaités. Toutefois, ces diverses contraintes de conception laissent plusieurs paramètres libres, de sorte qu'il est possible de constituer des dispositifs micro-électroniques inertiels conformes à l'invention avec des dimensions très diverses et de privilégier, au choix du concepteur, tel ou tel paramètre considéré comme important pour une application donnée.

L'amortissement fluide agit comme un filtre passe-bas qui supprime les déplacements dus à des accélérations parasites. Un réglage de la fréquence de coupure peut être effectué par l'homme de métier, en jouant notamment sur les paramètres précités pour éliminer les informations non pertinentes. Il peut être nécessaire de tenir compte de la poussée d'Archimède.

La viscosité dépend de la température dans des proportions variables suivant le fluide utilisé. Les caractéristiques du capteur peuvent donc varier de façon non négligeable avec la température. Plusieurs solutions sont envisageables pour limiter l'impact de ce phénomène :
- mélange de fluides de viscosités différentes variant en sens inverse avec la température (du moment que ces liquides sont miscibles en sorte de former, dans les conditions d'utilisation, une seule phase),
- utilisation de fluides dont la viscosité est peu sensible à la température comme, par exemple, un mélange de liquides et de microbilles (le mélange peut être tellement intime que la condition d'unicité de la phase liquide peut être respectée),
- remplissage à l'aide de microbilles dont le comportement macroscopique est proche de celui d'un liquide (le fluide intégrateur est ainsi uniquement constitué de ces microbilles, en négligeant les espaces entre ces billes).

On comprend que le remplissage des cavités avec le fluide retenu doit être réalisé avec soin pour garantir l'unicité de la phase remplissant ces cavités ; des précisions seront données ci-dessous.

Le capteur à amortissement fluide de l'invention peut servir à vérifier qu'un mobile (sur lequel a été monté ce capteur) a été soumis à un profil d'accélération prédéterminé. C'est le cas, par exemple, du système de déclenchement d'un airbag. Il est alors souhaitable de discriminer une véritable situation d'accident d'un choc anodin dont l'accélération peut être forte mais dont la durée et le contenu énergétique sont faibles, et qui ne justifie pas le gonflage de l'airbag. Le capteur à amortissement fluide pourra être dimensionné afin de se déclencher uniquement lorsqu'une décélération forte sera mesurée pendant un temps suffisant (selon ce que décidera l'utilisateur final).

L'invention peut aussi être mise en oeuvre pour vérifier qu'un ensemble simultané ou successif d'évènements a eu lieu (ou au contraire n'a pas eu lieu). Ceci peut être obtenu par une combinaison de capteurs d'accélération à amortissement fluide orientés, ou non, dans différents axes et éventuellement conçus spécifiquement pour des mesures de rotation. La combinaison des informations obtenues peut être assurée par des éléments de liaison fluidique ou mécanique, de tout type connu approprié connus en soi.

Un dispositif selon l'invention peut aussi être utilisé comme capteur passif pour la surveillance d'un système fragile sur une durée longue (ce caractère passif résulte de ce que l'invention ne requiert pas d'apport d'énergie externe). Dans ce cas, son état est détecté par une lecture externe. La combinaison d'un ou plusieurs capteurs de ce type avec un système d'intégration ou des dispositifs anti-retour placés sur la masse mobile, est à même d'enregistrer les sollicitations maximales subies par un objet.

Selon encore une autre variante, un capteur conforme à l'invention peut être utilisé comme compteur d'évènements (en l'occurrence comme compteur des phases d'accélération dépassant un seuil prédéterminé, quelle que soit la durée de ces accélérations), en lui associant un dispositif d'incrémentation mécanique ou hydraulique. Le capteur peut aussi être utilisé pour enregistrer l'historique des accélérations subies par un mobile.

Les figures 2 et 3 représentent des capteurs selon l'invention utilisés comme détecteurs de trajectoire. Chaque détecteur est dimensionné par l'homme de métier pour un couple d'accélération-durée d'accélération qu'il aura choisi.

Ces dispositifs représentés aux figures 2 et 3 ne sont pas à l'échelle et les proportions entre les différents éléments n'ont pas été respectées, cela dans le but de rendre les figures plus lisibles (des dimensions réelles des éléments principaux sont données ci-dessous).

Le dispositif de la figure 2 correspond au schéma de principe de la figure 1, avec une masse **m** dont une tranche (en haut de la figure) présente un élargissement formant un piston **P** coulissant dans l'enceinte du dispositif, en sorte de définir des étranglements avec la paroi de l'enceinte ; cette enceinte est ainsi divisée en une cavité inférieure **C1** et une cavité supérieure **C2**.

Cette masse **m** est portée au dessus du fond par des bras déformables désignés sous la référence **R :** en effet ces bras déformables sont élastiques et agissent comme des ressorts parallèlement à la direction verticale ; comme ces bras sont en outre rigides selon les autres directions, on comprend que la masse ne se déplace que selon la direction verticale. Ces bras sont ici représentés comme étant formés en zig-zag, mais peuvent en variante être des bras simplement rectilignes ayant une épaisseur suivant la direction sensible très inférieure à son épaisseur perpendiculairement au plan de la figure 2.

La flèche à droite du dessin indique non seulement la direction mais aussi le sens des accélérations à détecter. Cette flèche est dirigée vers le bas, ce qui signifie qu'en cas d'accélération vers le bas, la masse se déplacera vers le haut.

Par analogie avec le schéma de la figure 1, le dispositif de la figure 2 comporte en outre un système de lecture optique **L** de type vernier.

Des butées de fin de course **B** et des guides de glissement **G** sont avantageusement prévus, en complément des éléments principaux représentés à la figure 1. Les butées de fin de course **B** évitent la destruction des dispositifs lors de leur remplissage et en cours d'utilisation en limitant les déplacements de la masse (et les déformations des bras) et donc de ce fait en limitant les contraintes mécaniques appliquées. Les guides de glissement **G** permettent de limiter l'effet d'une accélération « parasite » dans le plan de la figure 2, mais dans la direction horizontale (c'est-à-dire dans une direction perpendiculaire à la direction sensible). L'influence sur le freinage de la masse **m** de ces butées ou de ces guides, lorsqu'ils existent, est limitée.

Des ronds noirs, sur cette figure 2, représentent des orifices **O** servant au remplissage de l'enceinte avec le fluide **F** formant une phase unique.

Le dispositif de la figure 3 possède quant à lui, non seulement un système de lecture optique de type vernier comme celui de la figure 2, mais en outre un système de verrouillage mécanique de fin de course de tout type connu approprié, noté **Com.**

En présence de l'accélération d'entraînement nominale retenue pour le dimensionnement, le dispositif de la figure 3 va ainsi se verrouiller au bout d'un temps donné T. Pour une accélération d'amplitude plus importante, le temps de verrouillage sera plus court. Pour une accélération plus faible le système de ne verrouillera pas. La lecture de la position du piston et l'information de verrouillage donnent donc une information sur le niveau d'accélération intégré dans le temps. La détection de ce couple accélération-durée confirmera, ou non, que le mobile a suivi une trajectoire proche de celle qui était prévue.

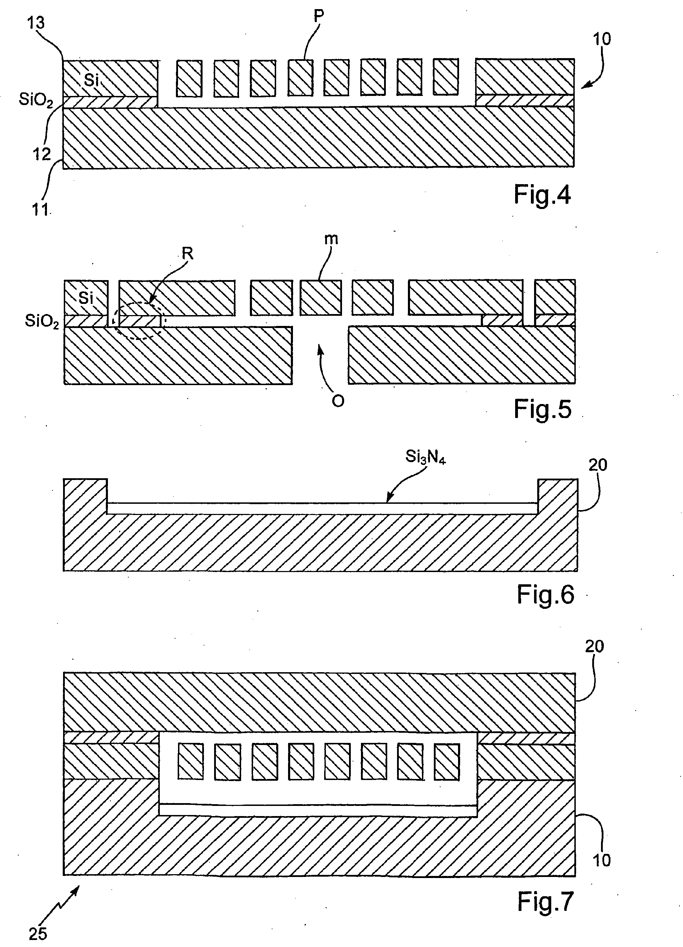

Les figures 4 à 7 représentent des étapes de la fabrication du dispositif de la figure 2 (ou de la figure 3).

Ce dispositif est réalisé par usinage de deux substrats 10 et 20.

Le premier substrat 10 est ici en SOI (Silicon On Insulator); il comporte ainsi une couche massive 11, surmontée d'une couche d'oxyde de silicium 12, et une couche de silicium usiné 13, ayant par exemple une épaisseur de 60 microns. Ce substrat est utilisé pour la réalisation de l'essentiel de l'enceinte et des parties mécaniques mobiles du capteur, dont la masse m et donc de la partie piston P (figure 4) et les bras de suspension R (figure 5). Pour faciliter les étapes de gravure de la couche d'oxyde 12 sous la masse, celle-ci comporte avantageusement des trous d'accès du fluide de gravure.

Les bras de suspension sont d'un seul tenant avec la masse (voir la figure 5) et sont fixés à la paroi de l'enceinte, à leurs extrémités opposées à leurs extrémités solidaires de la masse, par des plots non gravés dans la couche d'oxyde d'origine.

Le second substrat 20 est avantageusement en verre, ici de type « Borofloat 33 ». Il sert de couvercle et permet d'assurer l'étanchéité de la chambre. En outre, étant en verre il est transparent et contribue à permettre la lecture du dispositif **L**.

Le substrat de SOI 10 est gravé en profondeur par des gravures plasma mais peut, en variante, être gravé par d'autres procédés, tel que la gravure humide KOH par exemple. Comme indiqué, des trous sont réalisés dans les parties mobiles de la couche de silicium 13 pour faciliter leur libération (gravure de la coche d'oxyde enterré 12). En outre dans le fond de ce substrat sont réalisés les orifices de remplissage **O** (mais, en variante, certains (ou tous) des orifices sont réalisés dans le second substrat 20).

Le substrat en verre 20 est gravé en creux pour réaliser un espace au-dessus du piston formé dans la couche 13, et permettre ainsi une circulation de fluide entre ce couvercle 20 et la masse. Une couche de nitrure de silicium 21 est avantageusement déposée au fond de cette zone en creux pour éviter tout risque de soudure des parties mobiles avec le fond de cette zone en creux (figure 6). Les deux substrats sont alors assemblés par collage ou par soudure (figure 7).

Il a été indiqué que l'enceinte doit être remplie par une unique phase de fluide .sensiblement incompressible. Il en découle que, après l'assemblage de l'ensemble 25 de la figure 7, le remplissage doit garantir l'absence de bulle d'air afin d'éliminer tout problème dû aux tensions de surface des liquides qui perturberaient le fonctionnement par apparition de collage ou de forces parasites (en fait, pour éviter les phénomènes jugés rédhibitoires dans le document US - 6 453 746), il suffit d'éviter que ne se forment des surfaces libres de liquide dans l'enceinte.

La conception géométrique contribue avantageusement à la qualité du remplissage. C'est ainsi qu'il est recommandé que les parois des cavités à remplir ne possèdent que des angles internes arrondis, en évitant donc tout angle droit interne.

L'état des surfaces peut également être optimisé pour un remplissage optimum des cavités ; c'est ainsi que, de manière avantageuse, les parois pourront être traitées de façon à les rendre hydrophobes ou hydrofuges suivant l'effet désiré.

Le remplissage est avantageusement effectué à l'aide d'une structure spécifique destinée à maintenir le dispositif MEMS de la figure 7 en contact avec les joints des buses de remplissage en liquide. Ces buses de remplissage peuvent être reliées à des pousse-seringue (pour l'injection des liquides) et des pompes à vide (pour faciliter le remplissage). Une telle structure spécifique est schématisée à la figure 8, avec deux plaques 31 et 32 destinées à enserrer l'ensemble en maintenant la périphérie des orifices O en appui sur les joints J, l'un des orifices étant en communication avec un canal d'injection (à gauche) et l'autre avec un canal d'aspiration (à droite) relié à une pompe à vide.

La phase de remplissage typique est avantageusement la suivante, en mettant en oeuvre un fluide intermédiaire :
- montage et blocage du MEMS sur le support de remplissage,
- dégazage des liquides de remplissage,
- mise sous vide du MEMS,
- remplissage du MEMS avec de l'alcool isopropyl, liquide à fable tension de surface (approximativement égale à 20 mN/m),
- centrifugation,
- remplissage de l'enceinte avec le liquide final, par exemple de l'eau, dont la viscosité est adaptée aux besoins (environ 10-3 Ns/m²) et dont la tension de surface est plus importante (environ 72 mN/m),
- contrôle visuel du remplissage (retour éventuel au point 5 si des bulles sont encore présentes dans le dispositif),
- scellement des orifices de remplissage (une lamelle est collée sur chaque orifice du dispositif).

Un exemple de dimensionnement est donné ci-dessous.

Dans le cas d'un capteur du type de la figure 3 se verrouillant pour une accélération constante de 10 g pendant une durée variant de 10 à 60 s (cf tableau ci-dessous) et pour une course de piston de 100 microns, les paramètres typiques sont les suivants :
- la masse en mouvement **m** (y compris le piston) est de 1 mg,
- un alésage a une largeur égale à la largeur du piston augmentée de 10 microns (la largeur de fuite entre le piston et les parois de l'enceinte est alors de 5 microns),
- les ressorts sont constitués de cinq poutres élastiquement déformables associées en série ; chaque poutre a une longueur de 2250 microns et une largeur de 5 microns,
- le substrat de verre est gravé sur 7 microns de profondeur au-dessus de la masse mobile,
- les trous facilitant la gravure de la couche d'oxyde enterré 12 ont une dimension caractéristique de 10 microns et sont espacés de 20 microns,
- un piston de largeur et de longueur définies en fonction de la durée d'accélération à détecter : le tableau ci-dessous donne des exemples de dimensionnement.

| Durée d'intégration | Largeur de piston (pour une longueur de 1 mm) | Largeur de piston (pour une longueur de 200 microns) |
|---|---|---|
| 10 s | 350 microns | 780 microns |
| 20 s | 480 microns | 1100 microns |
| 30 s | 600 microns | 1300 microns |
| 60 s | 850 microns | 1900 microns |

De nombreuses variantes sont possibles, en particulier sur les matériaux. Différents substrats peuvent être utilisés : SOI, silicium, verre, quartz, etc. de façon générale tous les substrats semi-conducteurs, les polymères, les céramiques, les métaux. Si aucune lecture optique n'est prévue au travers du couvercle, celui-ci peut être un matériau opaque. Les parties mécaniques mobiles peuvent être réalisées par empilement successif de couches de polymère sur un substrat quelconque (le substrat sert uniquement de support mécanique dans ce cas). D'autres solutions techniques permettent de réaliser les parties mécaniques en métal (procédé LIGA, électrodéposition de métal, etc.). Le liquide utilisé pour le remplissage des cavités peut être de l'eau ou tout autre liquide sensiblement incompressible, selon les besoins, par exemple un alcool tel que l'alcool isopropyl.

Des étapes supplémentaires de traitement peuvent être utiles à la réalisation du dispositif (étapes de dopage du semi-conducteur, métallisation... pour la lecture de l'information).

La lecture de l'information de verrouillage peut être envisagée en réalisant des reprises de contact en face arrière (de type via), ou en face avant par métallisation de certaines surfaces. Dans cette configuration, le liquide employé doit garantir une isolation électrique en l'absence de contact mécanique (tant que le verrouillage mécanique n'a pas eu lieu).

On peut noter que selon l'invention :
- les techniques de fabrication employées peuvent être des techniques de la micro-électronique, adaptées à une fabrication collective,
- l'information saisie peut être qu'une accélération supérieure à un seuil donné a été subie pendant un laps de temps important, paramétré durant la phase de conception, et mémorisé par la position de la partie mobile,
- les étranglements peuvent générer des pertes de charge importantes lors de l'écoulement du fluide,
- ce dispositif peut ainsi être un intégrateur,
- ce dispositif de mesure est autonome, ne nécessitant pas d'électronique de traitement pour mémoriser l'information,
- le dispositif est simple (en particulier, il ne nécessite pas de micro-engrenages ou de micro-mécanismes complexes.

Un dispositif selon l'invention se prête à de très nombreuses applications ; c'est ainsi qu'il peut, par exemple, servir à la détection locale de séismes en vue de la mise en sécurité automatique de certains réseaux (par exemple, désactiver automatiquement un réseau électrique pour éviter des incendies) ou de certains appareils.

## Revendications

1. Dispositif micro-électronique inertiel comportant, dans un empilement de couches, une enceinte et une masse reliée à la paroi de cette enceinte par des éléments déformables en sorte d'être mobile dans cette enceinte parallèlement aux couches suivant une unique direction dite direction sensible, cette masse mobile étant montée mobile dans un alésage de l'enceinte en sorte de former un étranglement séparant cette enceinte en deux cavités, cette enceinte étant remplie par un fluide sensiblement incompressible formant une phase unique.

2. Dispositif selon la revendication 1, **caractérisé en ce que** le fluide sensiblement incompressible est de l'eau.

3. Dispositif selon l'une quelconque des revendications 1 à 2, **caractérisé en ce que** les deux cavités sont de largeurs différentes transversalement à la direction sensible, les éléments déformables étant dans la cavité de plus grande largeur et l'alésage étant défini par la paroi de la cavité de plus petite largeur.

4. Dispositif selon l'une quelconque des revendications 1 à 3, **caractérisé en ce que** la masse mobile comporte une portion élargie formant un piston délimitant l'étranglement conjointement avec l'alésage.

5. Dispositif selon l'une quelconque des revendications 1 à 4, **caractérisé en ce que** l'empilement de couches comporte une couche formant un fond, une couche dans laquelle sont formés la masse mobile et les éléments déformables, d'un seul tenant, et une couche formant un couvercle.

6. Dispositif selon l'une quelconque des revendications 5, **caractérisé en ce que** la distance entre le couvercle de l'enceinte et la masse mobile est la profondeur d'un creux ménagé dans la couche formant ce couvercle.

7. Dispositif selon l'une quelconque des revendications 1 à 6, **caractérisé en ce que** l'enceinte comporte au moins deux orifices de remplissage (O) obturés de manière étanche, dont un orifice débouchant dans chaque cavité.

8. Dispositif selon l'une quelconque des revendications 1 à 7, **caractérisé en ce qu'**il comporte un dispositif de lecture.

9. Dispositif selon la revendication 8, **caractérisé en ce qu'**il comporte en outre un dispositif de verrouillage.

10. Procédé de fabrication d'un dispositif micro-électronique inertiel selon l'une quelconque des revendications 1 à 9, **caractérisé en ce que** l'on forme un empilement de couches , on y définit une enceinte, une masse reliée à la paroi de cette enceinte par des éléments déformables en sorte d'être mobile dans cette enceinte parallèlement aux couches suivant une unique direction sensible, cette masse étant montée mobile dans un alésage de l'enceinte en sorte de former un étranglement séparant cette enceinte en deux cavités, et on remplit cette enceinte par un fluide sensiblement incompressible formant une phase unique.

11. Procédé selon la revendication 10, **caractérisé en ce que** l'on forme l'empilement de couches en sorte de laisser temporairement dégagé au moins un orifice de remplissage, et on fait dégazer le liquide de remplissage, on met l'enceinte sous vide et on la remplit avec ce liquide de remplissage.

12. Procédé selon la revendication 11, **caractérisé en ce qu'**en outre, on fait dégazer un liquide de remplissage temporaire, on remplit l'enceinte avec ce liquide de remplissage temporaire et on remplace ce dernier par le liquide de remplissage.

13. Procédé selon la revendication 12, **caractérisé en ce que** le liquide de remplissage temporaire est un liquide présentant une tension de surface inférieure à celle du liquide de remplissage.

14. Procédé selon l'une quelconque des revendications 10 à 13, **caractérisé en ce que** l'on remplit l'enceinte par un orifice de remplissage et on aspire au moins une partie de ce liquide par un orifice d'aspiration.

15. Procédé selon l'une quelconque des revendications 10 à 14, **caractérisé en ce que** l'on vérifie le bon remplissage de l'enceinte par contrôle visuel au travers d'une portion transparente du dispositif.

## Claims

1. An inertial micro-electronic device comprising in a layer stack a chamber and a mass connected to the wall of said chamber by deformable elements so as to be movable in said chamber in parallel relationship to the layers in a single direction referred to as the sensitive direction, the movable mass being mounted movably in a bore of the chamber so as to form a restriction separating said chamber into two cavities, said chamber being filled with a substantially incompressible fluid forming a single phase.

2. A device according to claim 1 **characterised in that** the substantially incompressible fluid is water.

3. A device according to either one of claims 1 and 2 **characterised in that** the two cavities are of different widths transversely to the sensitive direction, the deformable elements being in the cavity of greater width and the bore being defined by the wall of the cavity of smaller width.

4. A device according to any one of claims 1 to 3 **characterised in that** the movable mass comprises an enlarged portion forming a piston delimiting the restriction jointly with the bore.

5. A device according to any one of claims 1 to 4 **characterised in that** the layer stack comprises a layer forming a bottom, a layer in which the movable mass and the deformable elements are formed in one piece and a layer forming a cover.

6. A device according to any one of claims 5 **characterised in that** the distance between the cover of the chamber and the movable mass is the depth of a hollow provided in the layer forming said cover.

7. A device according to any one of claims 1 to 6 **characterised in that** the chamber comprises at least two sealingly closed filling orifices (O), an orifice thereof opening into each cavity.

8. A device according to any one of claims 1 to 7 **characterised in that** it comprises a reading device.

9. A device according to claim 8 **characterised in that** it further comprises a locking device.

10. A process for the production of an inertial micro-electronic device according to any one of claims 1 to 9 **characterised in that** a layer stack is formed, defined therein is a chamber, and a mass connected to the wall of said chamber by deformable elements so as to be movable in said chamber in parallel relationship with the layers in a single sensitive direction, said mass being mounted movably in a bore of the chamber so as to form a restriction separating said chamber into two cavities, and said chamber is filled with a substantially incompressible fluid forming a single phase.

11. A process according to claim 10 **characterised in that** the layer stack is formed in such a way as to leave at least one filling orifice temporarily open and the filling liquid is degassed, the chamber is put under vacuum and the chamber is filled with said filling liquid.

12. A process according to claim 11 **characterised in that** in addition a temporary filling liquid is degassed, the chamber is filled with said temporary filling liquid and the latter is replaced by the filling liquid.

13. A process according to claim 12 **characterised in that** the temporary filling liquid is a liquid having a surface tension less than that of the filling liquid.

14. A process according to any one of claims 10 to 13 **characterised in that** the chamber is filled by way of a filling orifice and at least a part of said liquid is sucked off by way of a suction orifice.

15. A process according to any one of claims 10 to 14 **characterised in that** good filling of the chamber is verified by visual checking through a transparent portion of the device.

## Patentansprüche

1. Mikroelektronische Trägheitsvorrichtung, umfassend in einem Stapel von Schichten eine Kammer und eine Masse, die mit der Wand der Kammer durch verformbare Elemente so verbunden ist, dass sie in dieser Kammer parallel zu den Schichten in einer einzigen Richtung, sensible Richtung genannt, beweglich ist, wobei diese bewegliche Masse in einer Bohrung der Kammer beweglich so montiert ist, dass eine Drosselung gebildet wird, die die Kammer in zwei Hohlräume teilt, wobei die Kammer mit einem im Wesentlichen unkomprimierbaren Fluid gefüllt ist, das eine einzige Phase bildet.

2. Vorrichtung nach Anspruch 1, **dadurch gekennzeichnet, dass** das im Wesentlichen unkomprimierbare Fluid Wasser ist.

3. Vorrichtung nach einem der Ansprüche 1 bis 2, **dadurch gekennzeichnet, dass** die beiden Hohlräume von verschiedenen Breiten quer zur sensiblen Richtung sind, wobei die verformbaren Elemente in dem Hohlraum größerer Breite sind und die Bohrung von der Wand des Hohlraums kleinerer Breite gebildet ist.

4. Vorrichtung nach einem der Ansprüche 1 bis 3, **dadurch gekennzeichnet, dass** die bewegliche Masse einen verbreiterten Teil umfasst, der einen Kolben bildet, der zusammen mit der Bohrung die Drosselung begrenzt.

5. Vorrichtung nach einem der Ansprüche 1 bis 4, **dadurch gekennzeichnet, dass** der Stapel von Schichten eine einen Boden bildende Schicht, eine Schicht, in der die bewegliche Masse und die verformbaren Elemente einstückig gebildet sind, und eine einen Deckel bildende Schicht umfasst,

6. Vorrichtung nach einem der Ansprüche 5, **dadurch gekennzeichnet, dass** der Abstand zwischen dem Deckel der Kammer und der beweglichen Masse die Tiefe einer Vertiefung ist, die in der diesen Deckel bildenden Schicht ausgespart ist.

7. Vorrichtung nach einem der Ansprüche 1 bis 6, **dadurch gekennzeichnet, dass** die Kammer mindestens zwei dicht verschlossene Füllöffnungen (O) umfasst, von denen in jeden Hohlraum eine mündet.

8. Vorrichtung nach einem der Ansprüche 1 bis 7, **dadurch gekennzeichnet, dass** sie eine Lesevorrichtung umfasst.

9. Vorrichtung nach Anspruch 8, **dadurch gekennzeichnet, dass** sie außerdem eine Verriegelungsvorrichtung umfasst.

10. Verfahren zur Herstellung einer mikroelektronischen Trägheitsvorrichtung nach einem der Ansprüche 1 bis 9, **dadurch gekennzeichnet, dass** man einen Stapel von Schichten bildet, man darin eine Kammer, eine Masse bildet, die mit der Wand der Kammer durch verformbare Elemente so verbunden ist, dass sie in der Kammer parallel zu den Schichten in einer einzigen sensiblen Richtung beweglich ist, wobei die Masse in einer Bohrung der Kammer beweglich so montiert ist, dass eine Drosselung gebildet wird, die die Kammer in zwei Hohlräume teilt, und man diese Kammer mit einem im Wesentlichen unkomprimierbarcn Fluid füllt, das eine einzige Phase bildet.

11. Verfahren nach Anspruch 10, **dadurch gekennzeichnet, dass** man den Stapel von Schichten so bildet, dass vorübergehend mindestens eine Füllöffnung freigelegt gelassen wird, und man die Füllflüssigkeit sich entgasen lässt, man die Kammer unter Vakuum setzt und man sie mit der Füllflüssigkeit füllt.

12. Verfahren nach Anspruch 11, **dadurch gekennzeichnet, dass** man außerdem eine Flüssigkeit zur vorübergehenden Füllung sich entgasen lässt, man die Kammer mit dieser Flüssigkeit zur vorübergehenden Füllung füllt und man diese durch die Füllflüssigkeit ersetzt.

13. Verfahren nach Anspruch 12, **dadurch gekennzeichnet, dass** die Flüssigkeit zur vorübergehenden Füllung eine Flüssigkeit ist, die eine niedrigere Oberflächenspannung als die Füllflüssigkeit aufweist.

14. Verfahren nach einem der Ansprüche 10 bis 13, **dadurch gekennzeichnet, dass** man die Kammer über eine Füllöffnung füllt und man mindestens einen Teil dieser Flüssigkeit über ein Saugöffnung ansaugt.

15. Verfahren nach einem der Ansprüche 10 bis 14, **dadurch gekennzeichnet, dass** man die richtige Füllung der Kammer durch Sichtkontrolle durch einen transparenten Teil der Vorrichtung überprüft.
